# EUROPEAN PATENT APPLICATION

(11) **EP 2 919 399 A1**
(43) Date of publication of application: **16.09.2015**
(21) Application number: 15158641.9
(22) Date of filing: 11.03.2015
(51) Int. Cl.: H04H 60/04

(54) **AUDIO SYSTEM AND AUDIO SIGNAL PROCESSING DEVICE**

(30) Priority: 11.03.2014 JP 2014047455; 20.01.2015 JP 2015008765
(71) Applicant: YAMAHA CORPORATION, Hamamatsu-shi Shizuoka 430-8650 (JP)
(72) Inventor: Hayashi, Tomoyuki, Hamamatsu-shi, Shizuoka 430-8650 (JP); Sekido, Yuichi, Hamamatsu-shi, Shizuoka 430-8650 (JP)
(74) Representative: Carstens, Dirk Wilhelm

(57) **Abstract**

When a track A to be monitored and a track B to which an audio signal on the track A is to be output are selected, an input port (11, 14) corresponding to the track A and an output port (12, 15) corresponding to the track B are identified based on information about a connection by a first patch (21) portion and a second patch portion (33). The identified input port and the identified output port are then assigned to a selected one of monitoring buses (16). Next, the assignment of an audio signal from the track B to the identified output port is canceled. This ensures that an audio signal on the track A to be monitored can be directly outputted from the identified output port of a designated I/O device (10, 13).

## Description

### {Technical Field}

The invention relates to an audio system and an audio signal processing device that are capable of directly outputting an audio signal to be monitored in the audio signal processing device from an arbitrary output port of an arbitrary I/O device.

### {Background Art}

### It has been conventionally known that an audio system connected to an I/O device and to a mixer through an audio network is used as one type of audio system that handles an audio signal (see PTL 1). The I/O device inputs and outputs an audio signal. The mixer receives an audio signal inputted to an input port of the I/O device and performs a mixing process or other audio signal process on the received audio signal. The I/O device then outputs the processed signal from its output port. Meanwhile, a digital audio workstation (DAW) is capable of performing an audio signal process, such as a mixing process, and implemented by a personal computer (hereinafter referred to as a "PC") on which DAW application software is installed. Therefore, when the mixer is replaced by the DAW, it is possible to establish an audio system that can be configured with ease. In such an audio system, the PC in which the DAW is started operates as an audio signal processing device, thereby performing a predetermined audio signal process on an audio signal. The audio signal is exchanged between the I/O device and the DAW through an audio network. For example, audio signals, such as a vocal sound and a musical instrument sound that are outputted from plural microphones and electric or electronic musical instruments, are inputted to the input port of the I/O device. The audio signals inputted to the input port are transmitted to the DAW through the audio network. The DAW performs an audio signal process on the transmitted audio signals in a track, and mixes the processed audio signals in a bus. The mixed or otherwise processed audio signals are transmitted from the DAW to the I/O device through the audio network. The audio signals transmitted from the DAW are outputted from the output port of the I/O device to which, for example, a speaker is connected.

Meanwhile, microphones and electric, electronic, and various other musical instruments, which are disposed to match the locations of musicians playing musical instruments connected to the I/O device, including vocalists, are placed near the musicians. The musicians play music while monitoring their mixed performance sounds or the own performance sound at locations at which the microphones are placed. Monitor signals are outputted from the output port of the I/O device so that the musicians can hear the monitor signals through speakers, headphones, and other monitoring devices placed to match the locations of the musicians.

### {Citation List}

### {Patent Literature}

{PTL1} JP 2012-204864 A

### {Summary of Invention}

### {Technical Problem}

In a conventional audio system, an audio signal on a DAW track is targeted as the audio signal to be monitored. The track to be monitored is designated by a musician or by a DAW operator. Further, a track for transmitting the audio signal on the designated track to the I/O device through the audio network is also designated so that the audio signal on the track to be monitored, which is transmitted from the DAW to the I/O device, is outputted from a designated output port of the I/O device. It is preferred that an output port connected to a monitoring device for a musician who wishes to monitor be designated. Thus, the musician can monitor the audio signal outputted from the output port. However, if any DAW track is already assigned to the output port of the I/O device that is to be designated, the audio system cannot assign the audio signal to be monitored to that output port. This compels the musician to designate alternative assignable output port and results in the trouble to connect the monitoring device to the alternative output port.

Further, in the audio system, the audio signal on a track to be monitored is an audio signal inputted to the input port of the I/O device. Therefore, the audio signal at the input port of the I/O device that corresponds to the track to be monitored can be directly outputted to the output port to which the monitoring device is connected. However, if any DAW track is already assigned to an output port of the I/O device that is to be designated, it is necessary to cancel such an assignment and assign the audio signal to be monitored to the output port. In such an instance, a cumbersome setup procedure needs to be performed.

In view of the above circumstances, an object of the present invention is accordingly to provide an audio system and an audio signal processing device that permit an audio signal on a DAW track to be monitored to be outputted from an arbitrary output port of an arbitrary I/O device simply by performing a simple setup procedure.

### {Solution to Problem}

To achieve the above object an audio system of the invention is an audio system including: a plurality of I/O devices respectively including a first input/output port having a plurality of ports; an audio signal processing device including at least a second input/output port and a plurality of tracks, the second input/output port having a plurality of ports; an audio network configured to connect the audio signal processing device with the I/O devices; a first patch portion configured to logically connect an arbitrary port of the first input/output port and an arbitrary port of the second input/output port over the audio network; a second patch portion configured to logically connect an arbitrary port of the second input/output port and an arbitrary one of the tracks in the audio signal processing device; and a plurality of monitoring buses configured to connect the ports of the first input/output port in the I/O devices, wherein, when a track A, which is one of the tracks and is to be monitored, and a track B, which is one of the tracks and is a destination to which an audio signal on the track A is to be outputted, are selected, an input port among the first input/output port that corresponds to the track A and an output port among the first input/output port that corresponds to the track B are identified based on information about a connection by the first patch portion and the second patch portion, the identified input port and the identified output port are assigned to a selected one of the monitoring buses, and an audio signal from the identified input port is outputted from the identified output port instead of or in addition to an audio signal from the track B.

### {Advantageous Effects of Invention}

When the track A to be monitored and the track B to which the audio signal on the track A is to be outputted are selected, the audio system according to an embodiment of the present invention refers the first patch portion and the second patch portion to identify the input port corresponding to the track A and the output port corresponding to the track B, assigns the identified input port and output port to a monitoring bus selected from the monitoring buses, and cancels the assignment of the audio signal from the track B to the identified output port. Therefore, the audio signal on the track to be monitored can be outputted from a designated port of a designated I/O device without changing a connection configuration. Further, as the identified input port and output port are assigned to a monitoring bus, the audio signal at an input port of an I/O device corresponding to a track to be monitored can be directly outputted to an output port to which a monitoring device is connected.

### {Brief Description of Drawings}

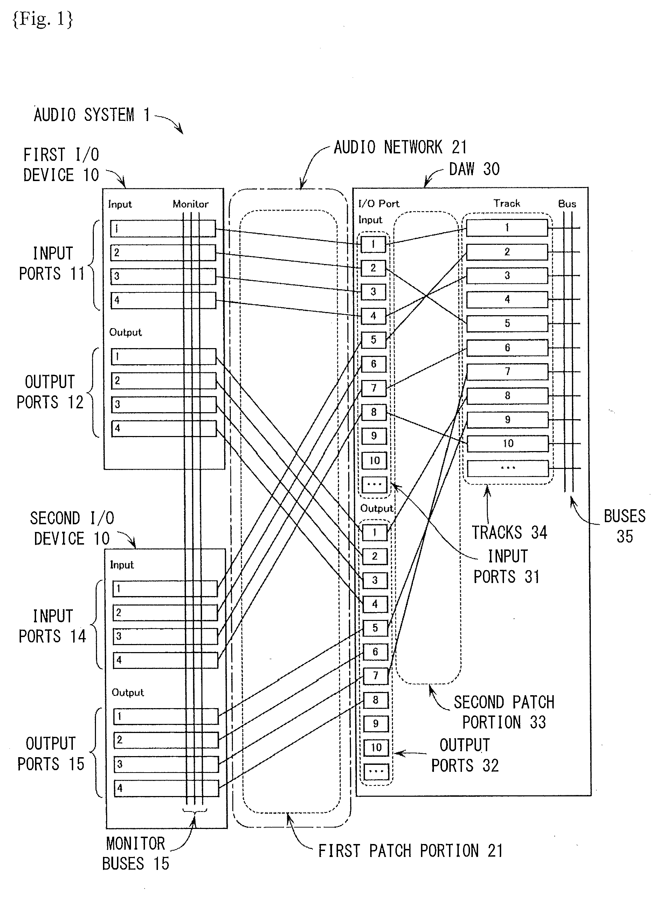

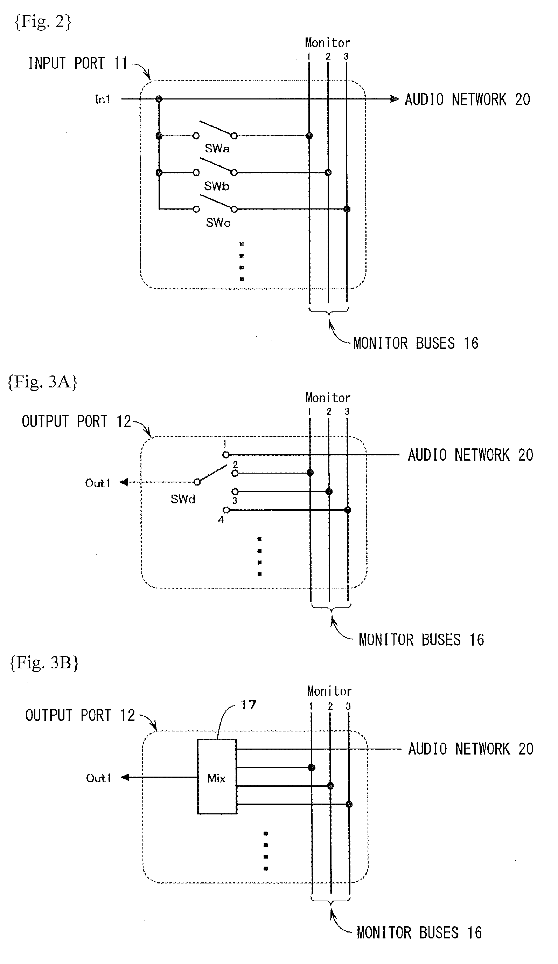

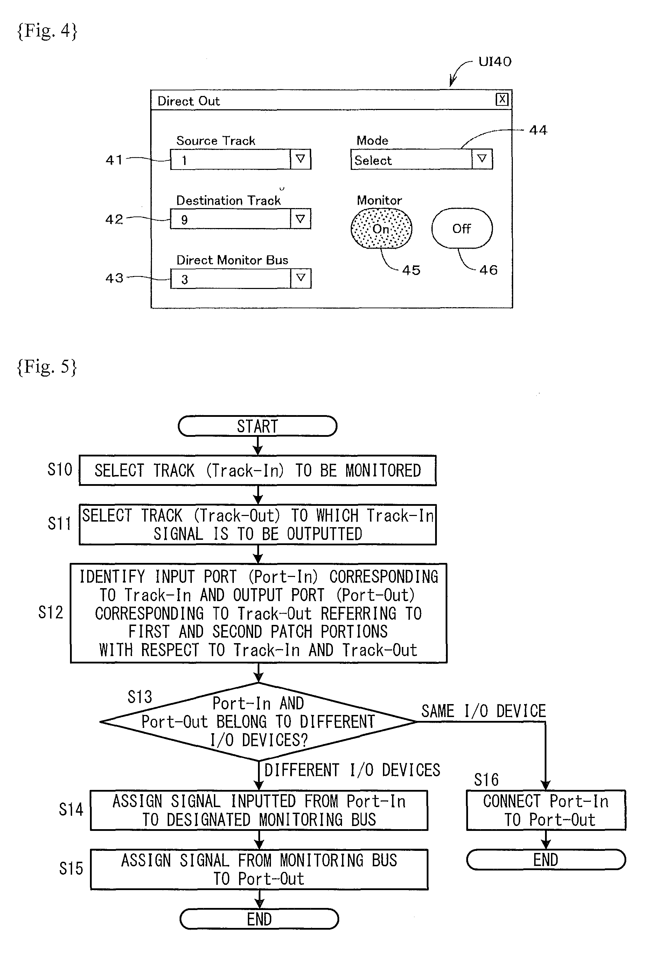

{Fig. 1} Fig. 1 is a block diagram illustrating a configuration of an audio system according to an embodiment of the present invention;
{Fig. 2} Fig. 2 is a diagram illustrating an exemplary configuration of an input port of an I/O device in the audio system according to an embodiment of the present invention;
{Figs. 3A} Fig. 3A is a diagram illustrating an exemplary configuration of an output port of the I/O device in the audio system according to an embodiment of the present invention;
{Figs. 3B} Fig. 3B is a diagram illustrating another exemplary configuration of the same;
{Fig. 4} Fig. 4 is a diagram illustrating a screen of a UI in the audio system according to an embodiment of the present invention; and
{Fig. 5} Fig. 5 is a flowchart illustrating a direct monitoring process performed by the audio system according to an embodiment of the present invention.

### {Description of Embodiments}

Fig. 1 is a block diagram illustrating a configuration of an audio system according to an embodiment of the present invention.

The audio system 1 shown in Fig. 1 is configured so that two I/O devices, that is, a first I/O device 10 and a second I/O device 13, and a digital audio workstation (DAW) 30 are connected through an audio network 20. In the depicted example, the first I/O device 10 includes a first input/output port that includes input ports 11 having four ports and output ports 12 having four ports, and the second I/O device 13 similarly includes a first input/output port that includes input ports 14 having four ports and output ports 15 having four ports. Audio signals outputted from plural microphones and electric or electronic musical instruments, such as vocal sounds and musical instrument sounds, can be inputted to the input ports 11 and 14 of the first I/O device 10 and the second I/O device 13. The audio signals inputted to the input ports 11 and 14 are inputted to the DAW 30 through the audio network 20. In the DAW 30, the inputted audio signals are subjected to an audio signal process. After being subjected to the audio signal process, the audio signals are outputted from the DAW 30 and transmitted to the first I/O device 10 or the second I/O device 13 through the audio network 20, and can be outputted from the output ports 12 and 15 of the first I/O device 10 and the second I/O device 13. These output ports are connected to a device, such as an amplifier or a headphone, so that the audio signals outputted from the DAW 30 and later-described directly outputted audio signals are outputted through the connected device. In the following description, an input port having the input port number N is referred to as an input port InN, and an output port having the output port number N is referred to as an output port OutN (N is a positive integer of 1 or greater).

The DAW 30 is an audio signal processing device according to an embodiment of the present invention and implemented by a personal computer (hereinafter referred to as the PC) on which DAW application software is installed. When the DAW application software installed on the PC is started, the PC operates as the DAW 30. After the DAW 30 is started, the PC operates as the audio signal processing device according to an embodiment of the present invention and is capable of performing a series of processes such as those for recording, playback, editing, and mixing of an audio signal. The DAW 30 includes a second input/output port (I/O port) that includes input ports 31 having plural ports In1 to In10 and output ports 32 having plural ports Out1 to Out10. An input port in the input ports 31 and an input port in the input ports 11 or 14 of the first I/O device 10 or the second I/O device 13 are connected through the audio network 20, and an output port in the output ports 32 and an output port in the output ports 12 or 15 of the first I/O device 10 or the second I/O device 13 are connected through the audio network 20. The connection between the I/O device input/output port and the DAW input/output port is a logical connection, and the ports to be connected are assigned by a first patch portion 21.

In the depicted example, in the first patch portion 21, the ports In1 to In4 of the input ports 31 of the DAW 30 are respectively assigned to the ports In1 to In4 of the input ports 11 of the first I/O device 10, and the ports In5 to In8 of the input ports 31 of the DAW 30 are respectively assigned to the ports In1 to In4 of the input ports 14 of the second I/O device 13. Further, in the first patch portion 21, the ports Out1 to Out4 of the output ports 32 of the DAW 30 are respectively assigned to the ports Out1 to Out4 of the output ports 12 of the first I/O device 10, and the ports Out5 to Out8 of the output ports 32 of the DAW 30 are respectively assigned to the ports Out1 to Out4 of the output ports 15 of the second I/O device 13. This ensures that audio signals inputted to the ports In1 to In4 of the input ports 11 of the first I/O device 10 are respectively inputted to the ports In1 to In4 of the input ports 31 of the DAW 30, and that audio signals inputted to the ports In1 to In4 of the input ports 14 of the second I/O device 13 are respectively inputted to the ports In5 to In8 of the input ports 31 of the DAW 30. Furthermore, audio signals subjected to the audio signal process, which are outputted from the ports Out1 to Out4 of the output ports 32 of the DAW 30, are respectively outputted from the ports Out1 to Out4 of the output ports 12 of the first I/O device 10, and audio signals subjected to the audio signal process, which are outputted from the ports Out5 to Out8 of the output ports 32 of the DAW 30, are respectively outputted from the ports Out1 to Out4 of the output ports 15 of the second I/O device 13.

The input ports and output ports of the I/O devices are formed of a physical plug for connecting earlier-mentioned microphones, headphones, and other external devices and a logical plug for connecting the individual ports and the audio network 20 (first patch portion 21). However, unless otherwise stated, the first input/output port means the latter plug, that is, a logical plug.

The connection configuration of the first patch portion 21 shown in Fig. 1 is merely an example. The individual ports of the first input/output ports of the first I/O device 10 and the second I/O device 13 may be respectively assigned to the individual ports of the second input/output ports of the DAW 30 in an alternative connection configuration (correspondence relation). A user interface (UI) provided by a network management program prepared for an operating system (OS) of the PC in which the DAW 30 is started can be used in the DAW 30 to perform setup so as to define which port of the first input/output port in the first patch portion 21 is to be assigned to which port of the second input/output port. When first patch information, which is the information about the first patch portion 21, is set up, it is stored in a storage region prepared in the DAW 30.

The audio network 20 is assumed to be a network that is capable of simultaneously handling plural audio signals and device control signals. A network in any format may be used as the audio network 20. However, it is assumed that the audio network 20 is a network which supports Ethernet. The first I/O device 10, the second I/O device 13, and the DAW 30 are assumed to be compliant with the environment of the audio network 20, and star-connected or daisy-chained to the audio network 20. As mentioned earlier, a logical connection is established between the I/O devices and the DAW 30. However, such a logical connection is established by means of routing based, for instance, on a transmission path and a transmission channel in the audio network 20. If, for example, the audio network 20 has sixteen transmission channels, setup is performed so that the port In1 of the input ports 11 of the first I/O device 10 serves as a transmission source of a first transmission channel and that the port In1 of the input ports 31 of the DAW 30 receives the same transmission channel, or set up is performed so that the port Out5 of the output ports 32 of the DAW 30 serves as a transmission source of a thirteenth transmission channel and that the port Out1 of the output ports 15 of the second I/O device 13 receives the same transmission channel. The audio network 20 is not limited to the one shown in the above example. The audio network 20 may be any network that is capable of transmitting audio signals of plural channels from an arbitrary transmission source to an arbitrary transmission destination.

The DAW 30 further includes a track 34. The tracks 34 include tracks that receive an input of an audio signal from the input ports 31 or an input of a mixed audio signal from buses 35. A predetermined audio signal process can be performed on an audio signal inputted to each track. In the following description, a track having the truck number M is referred to as a track TrM (M is a positive integer of 1 or greater). Plural tracks Tr1 to Tr10, ... are prepared in the tracks 34. Any arbitrary ports in the second input/output port, which includes the input ports 31 and the output ports 32, can be respectively connected to arbitrary tracks in the tracks 34. This connection is assumed to be a logical connection established by the aforementioned DAW application software. The assignment between a port and a track, which are to be connected, is made by a second patch portion 33. In the depicted example, in the second patch portion 33, the port In1 of the input ports 31 is assigned to the track Tr1 of the tracks 34, and the port In2 of the input ports 31 is assigned to the track Tr5 of the tracks 34, the port In4 of the input ports 31 is assigned to the track Tr3 of the tracks 34, the port In5 of the input ports 31 is assigned to the track Tr2 of the tracks 34, the port In7 of the input ports 31 is assigned to the track Tr6 of the tracks 34, and the port In8 of the input ports 31 is assigned to the track Tr10 of the tracks 34. Further, the port Out1 of the output ports 32 is assigned to the track Tr8 of the tracks 34, the port Out5 of the output ports 32 is assigned to the track Tr9 of the tracks 34, and the port Out7 of the output ports 32 is assigned to the track Tr7 of the tracks 34.

Setup is performed in the DAW 30 to define which port of the second input/output port, which includes the input ports 31 and the output ports 32, is to be assigned to which track in the tracks 34. When second patch information, which is the information about the second patch portion 33, is set up, it is stored in a storage region prepared in the DAW 30. The connection configuration of the second patch portion 33 shown in Fig. 1 is merely an example. Arbitrary ports of the second input/output port, which includes the input ports 31 and the output ports 32, may be respectively assigned to arbitrary tracks of the tracks 34 in an alternative connection configuration (correspondence relation).

In the above-described connection configuration of the first patch portion 21 and the second patch portion 33 shown in Fig. 1, an audio signal inputted to the port In1 of the input ports 11 of the first I/O device 10 is inputted to the track Tr1 of the tracks 34 through the port In1 of the input ports 31 of the DAW 30, an audio signal inputted to the port In1 of the input ports 14 of the second I/O device 13 is inputted to the track Tr2 of the tracks 34 through the port In5 of the input ports 31 of the DAW 30, an audio signal inputted to the port In4 of the input ports 11 of the first I/O device 10 is inputted to the track Tr3 of the tracks 34 through the port In4 of the input ports 31 of the DAW 30, an audio signal inputted to the port In2 of the input ports 11 of the first I/O device 10 is inputted to the track Tr5 of the tracks 34 through the port In2 of the inputs port 31 of the DAW 30, an audio signal inputted to the port In3 of the input ports 14 of the second I/O device 13 is inputted to the track Tr6 of the tracks 34 through the port In7 of the input ports 31 of the DAW 30, and an audio signal inputted to the port In4 of the input ports 14 of the second I/O device 13 is inputted to the track Tr10 of the tracks 34 through the port In8 of the input ports 31 of the DAW 30. Further, an audio signal subjected to an audio signal process in the DAW 30, which is outputted from the track Tr7 of the tracks 34, is outputted from the port Out3 of the output ports 15 of the second I/O device 13 through the port Out7 of the output ports 32 of the DAW 30, an audio signal subjected to an audio signal process in the DAW 30, which is outputted from the track Tr8 of the tracks 34, is output from the port Out1 of the output ports 12 of the first I/O device 10 through the port Out1 of the outputs port 32 of the DAW 30, an audio signal subjected to an audio signal process in the DAW 30, which is outputted from the track Tr9 of the tracks 34, is outputted from the port Out1 of the output ports 15 of the second I/O device 13 through the port Out5 of the output ports 32 of the DAW 30.

As described above, referring the first patch information about the first patch portion 21 and the second patch information about the second patch portion 33 makes it possible to determine the correspondence between the individual tracks of the tracks 34 and the first input/output port, which includes the input ports 11 and 14 and output ports 12 and 15 of the first I/O device 10 and the second I/O device 13.

The DAW 30 includes plural mixing buses 35. The buses 35 can be used to mix audio signals transmitted from the tracks 34 to the buses 35 in plural manners. The audio signal mixed in each bus of the buses 35 are outputted to an output destination track of the tracks 34, which can be arbitrarily selected for each bus by a user (operator), and transmitted to the I/O devices 10 or 13 through a port of the output ports 32 assigned to the output destination track and through the audio network 20. Further, in the individual tracks of the track 34, an audio signal process can be performed, for instance, on the frequency characteristic, volume level, and localization of an audio signal.

In the audio system 1 according to an embodiment of the present invention, an audio signal at an input port of an I/O device associated with the DAW 30 track to be monitored can be directly outputted to an output port of an I/O device connected with a monitoring device. The monitoring device permits a musician to monitor the directly outputted audio signal (this monitoring is hereinafter referred to as "direct monitoring"). More specifically, plural monitoring buses 16 for direct monitoring are provided so that an audio signal inputted to an arbitrary port among the input ports 11 of the first I/O device 10 and the input ports 14 of the second I/O device 13 can be directly outputted from an arbitrary output port among the output ports 12 of the first I/O device 10 and the output ports 15 of the second I/O device 13 when monitoring is turned on to issue an instruction for monitoring an audio signal inputted from an I/O device to an arbitrary track of the track 34. The monitoring buses 16 can be implemented by using part of resources for the audio network 20. More specifically, plural specific channels can be acquired and used as the monitoring buses 16. When the monitoring buses 16 are used, an audio signal inputted to an arbitrary track of the tracks 34 that is to be monitored can be directly monitored at an I/O device. When direct monitoring is to be performed, it is necessary to designate a track A to be monitored and designate a specific track B of the tracks 34 that corresponds to an output port among the output ports 12 and 15 to which the audio signal to be monitored is to be outputted. If, for instance, the track Tr1 of the tracks 34 is designated as a track to be monitored and the track Tr9 of the tracks 34 is designated as a track to which a monitored signal is to be outputted, the DAW 30 determines to which input port among the input ports 11 of the first I/O device 10 and of the input ports 14 of the second I/O device 13 the audio signal inputted to the track Tr1 to be monitored is inputted. In this instance, by referring to the first patch information about the first patch portion 21 and the second patch information about the second patch portion 33, it is determined that the input port is the port In1 of the input ports 11 of the first I/O device 10. The DAW 30 then issues a setup instruction (or outputs a command) to the first I/O device 10 so as to assign the port In1 of the first I/O device 10, which corresponds to the track Tr1, to an arbitrarily selected one of the monitoring buses 16. Next, the DAW 30 determines to which output port among the output ports 12 of the first I/O device 10 and the output ports 15 of the second I/O device 13 the audio signal outputted from the track Tr9, to which a monitored signal is to be outputted, is outputted. In this instance, by referring to the first patch information about the first patch portion 21 and the second patch information about the second patch portion 33, it is determined that the output port is the port Out1 of the output ports 15 of the second I/O device 13. The DAW 30 then issues a setup instruction (or outputs a command) to the second I/O device 13 so as to assign the port Out1 of the second I/O device 13, which corresponds to the track Tr9, to the aforementioned monitoring bus selected out of the monitoring buses 16. This ensures that the audio signal inputted to the port In1 of the input ports 11 of the first I/O device 10, which corresponds to the track Tr1, is outputted from the port Out1 of the output ports 15 of the second I/O device 13, which corresponds to the track Tr9, without being transmitted through the DAW 30 or the network 20. As a result, the audio signal is directly monitored on the I/O device side. In this instance, the audio signal from the track Tr9 is not outputted from the port Out1 of the output ports 15 because it is blocked (or reduced to a signal level of zero) at an outlet of the track Tr9, at the port Out5 of the output ports 32 to which the track Tr9 is assigned, or at the port Out1 of the output ports 15 of the second I/O device 13.

When the above-described direct output connection is established, an audio signal is outputted from an output port of an I/O device without being transmitted through the audio network 20 or the DAW 30. This makes it possible to directly monitor an audio signal without a time lag. Further, as an arbitrary input port and an arbitrary output port can be assigned to a monitoring bus, an audio signal can be directly outputted through plural I/O devices.

An exemplary configuration of the input ports 11 and 14 of the first I/O device 10 and the second I/O device 13 is shown in Fig. 2. Although Fig. 2 shows a configuration of only one input port (In1) of the input ports 11, all the input ports have the same configuration.

As shown in Fig. 2, an audio signal inputted to the port In1 of the input ports 11 is outputted to the audio network 20. The input port In1 is connected to each monitoring bus 16 through a switch. If there are three monitoring buses 16, that is, monitoring buses "1" to "3", as shown in Fig. 2, the input port In1 is connected to the three monitoring buses 16 through switches SWa, SWb and SWc, respectively. During a normal state during which monitoring is turned off, the switches SWa, SWb and SWc are all turned off. However, when monitoring is turned on in a situation where, for example, an audio signal on a track to be monitored is an audio signal from the port In1 of the input ports 11 and a bus selected from the monitoring buses 16 for the monitoring is monitoring bus "1", the switch SWa is turned on to assign the audio signal inputted to the port In1 of the input ports 11 to the monitoring bus "1", thereby outputting the audio signal inputted to the port In1 of the input ports 11 to the monitoring bus "1" of the monitoring buses 16.

An exemplary configuration of the output ports 12 and 15 of the first I/O device 10 and the second I/O device 13 is shown in Figs. 3A and 3B. Although Figs. 3A and 3B show a configuration of only one output port (Out1) of the output ports 12, all the output ports have the same configuration.

In the exemplary configuration shown in Fig. 3A, a line from the audio network 20 is connected to contact "1" of a selector switch SWd, and the three monitoring buses 16 are respectively connected to contacts "2", "3", and "4" of the selector switch SWd. The selector switch SWd selectively switches between an input from the audio network 20 and an input from the monitoring buses 16. The input selected by the selector switch SWd is outputted from the port Out1 of the output ports 12. During the normal state during which monitoring is turned off, the selector switch SWd is set to contact "1" so that an audio signal inputted from the audio network 20 is outputted to the port Out1 of the output ports 12. The audio signal inputted from the audio network 20 is an audio signal from a track of the DAW 30 that corresponds to the port Out1 of the output ports 12 (an audio signal from the track Tr8 in a situation shown in Fig. 1).

When monitoring is turned on in a situation where, for example, the port Out1 of the output ports 12 is assigned to the monitoring bus "1", which is one of the monitoring buses 16, the selector switch SWd is set to the contact "2" so that the audio signal from the monitoring bus "1" is directly outputted from the port Out1 of the output ports 12 and directly monitored. In this instance, the audio signal outputted from a track of the DAW 30 that corresponds to the port Out1 of the output ports 12 is blocked by the selector switch SWd and not outputted from the port Out1 of the output ports 12. As described above, in the exemplary configuration shown in Fig. 3A, an assignment of the audio signal from a track of the DAW 30 that corresponds to an output port of an I/O device for outputting a monitored signal to an output port of an I/O device is canceled when monitoring is turned on. As a result, the audio signal comes to be not outputted from an output port to which the monitored signal is directly outputted. Namely, an audio signal from the input port connected to the monitor bus "1" comes to be outputted from the port Out1 instead of the audio signal from the track of the DAW 30 that corresponds to the port Out1.

In the exemplary configuration shown in Fig. 3B, an audio signal from the audio network 20 and audio signals from plural monitoring buses 16 are inputted to a mixer circuit (Mix) 17 and mixed. Then, an audio signal from the mixer circuit 17 is outputted from the port Out1 of the output ports 12. In the mixer circuit 17, the audio signal inputted from the audio network 20 and the audio signals inputted from monitoring buses "1" to "3" of the monitoring buses 16 are mixed with their mixing ratio adjusted. During the normal state during which monitoring is turned off, the level of the audio signal inputted from the audio network 20 is set to "1 (attenuation amount: 0 dB)", but the level of each audio signal from the monitoring buses 16 is set to "0 (attenuation amount: -∞ dB)". Therefore, only the audio signal inputted from the audio network 20 is outputted from the Mix 17 and then outputted from the port Out1 of the output ports 12. The audio signal inputted from the audio network 20 is an audio signal from a track of the DAW 30 that corresponds to the port Out1 of the output ports 12.

If, for example, the port Out1 of the output ports 12 is assigned to the monitoring bus "1" of the monitoring buses 16 in a situation where monitoring is turned on, the level of the audio signal inputted from the monitoring bus "1" is set to "1 (attenuation amount: 0 dB)", and the levels of the audio signal inputted from the audio network 20 and the audio signals inputted from monitoring buses "2" and "3" of the monitoring buses 16 are set to "0 (attenuation amount: - ∞ dB)". Therefore, only the audio signal inputted from the monitoring bus "1" of the monitoring buses 16 is outputted from the mixer circuit 17 and then directly outputted from the port Out1 of the output ports 12.

Also in the exemplary configuration shown in Fig. 3B, an assignment of the audio signal from a track of the DAW 30 that corresponds to an output port of an I/O device for outputting a monitored signal to an output port of an I/O device is canceled when monitoring is turned on. As a result, the audio signal comes to be not outputted from an output port to which the monitored signal is directly outputted. Namely, an audio signal from the input port connected to the monitor bus "1" comes to be outputted from the port Out1 instead of the audio signal from the track of the DAW 30 that corresponds to the port Out1.

In the exemplary configuration shown in Fig. 3B, the audio signals inputted to the mixer circuit 17 may be mixed at an arbitrary mixing ratio and then outputted. If, for example, the port Out1 of the output ports 12 is assigned to the monitoring bus "1" of the monitoring buses 16 in a situation where monitoring is turned on, the audio signal from the monitoring bus "1" and the audio signal from the audio network 20 are mixed at a predetermined mixing ratio in the mixer circuit 17 and outputted from the port Out1 of the output ports 12. This ensures that the audio signal from the monitoring buses 16 and the audio signal from the audio network 20 are both outputted. Namely, an audio signal from the input port connected to the monitor bus "1" comes to be outputted from the port Out1 in addition to the audio signal from the track of the DAW 30 that corresponds to the port Out1. Consequently, when an audio signal from a track of the DAW 30 is to be monitored in addition to an audio signal on a track to be monitored by the user, the user can monitor the audio signal outputted to the monitoring buses 16 and the audio signal from the audio network 20. In this instance, the audio signal from the track of the DAW 30 is assumed to be an accompaniment sound or the like.

An example of a screen of a user interface (UI) for direct monitoring setup is shown in Fig. 4.

The screen of the UI 40 shown in Fig. 4 is displayed on a display of the PC in which the DAW 30 is started. The UI 40 shows three vertically arranged fields on the left side of the screen. A monitoring track designation field 41 is used to designate a track (Source Track) to be monitored. A destination track designation field 42 is used to designate a track (Destination Track) to which a monitored signal is to be outputted. A bus designation field 43 is used to designate a monitoring bus (Direct Monitor Bus) that is used for direct monitoring. In the monitoring track designation field 41, clicking a pointing device or performing a similar operating procedure with a cursor placed over the " ∇" mark at the right end opens a track drop-down list. Then, from the drop-down list, the track number of a track to be monitored among the tracks 34 is selected. The drop-down list shows only selectable track numbers of tracks to which audio signals from the input ports 11 of the first I/O device 10 or the input ports 14 of the second I/O device 13 are inputted, based on the first patch information and the second patch information. In the example of Fig. 4, the track Tr1 is designated as the track to be monitored. In the destination track designation field 42, clicking the "∇" mark opens a drop-down list of selectable tracks. From the drop-down list, the track number of a track to which the monitored signal is to be outputted among the tracks 34 is selected. The drop-down list shows only selectable track numbers of tracks that output audio signals to the output ports 12 of the first I/O device 10 or the output ports 15 of the second I/O device 13, based on the first patch information and the second patch information. In the example of Fig. 4, the track Tr9 is designated as the track to which the monitored signal is to be outputted. In the bus designation field 43, clicking the "∇" mark opens a drop-down list of selectable monitoring buses 16. From the drop-down list, the bus number of a monitoring bus to be used for direct output is selected. The drop-down list shows the bus numbers of the monitoring buses 16. In the example of Fig. 4, monitoring bus "3" is designated.

A mode selection field 44 for selecting a mode (Mode) is displayed on the upper right side of the screen of the UI 40. Either "Select" or "Mix" can be chosen from the mode selection field 44. When "Select" is chosen, only the audio signal on the track designated by the monitoring track designation field 41 is monitored and directly outputted from an output port corresponding to the track designated by the destination track designation field 42. When "Mix" is chosen, an audio signal on the track designated by the monitoring track designation field 41 and an audio signal assigned to the track designated by the destination track designation field 42 are mixed and outputted from an output port corresponding to the designated destination track. In this instance, the output port configuration is assumed to be as shown in Fig. 3B, and an appropriate mixing ratio is set in the mixer circuit 17 depending on whether the "Select" or "Mix" mode is chosen. The mixing ratio may be made selectable through some setup screen or the like. Alternatively, preselected and stored mixing ratios may be used.

Further, the "On" button 45 and the "Off' button 46 are displayed below the mode selection field 44. The "On" button 45 issues an instruction for turning on monitoring. The "Off" button 46 issues an instruction for turning off monitoring. When the "On" button 45 is clicked, the DAW 30 starts a direct monitoring process in accordance with the selections made in the monitoring track designation field 41, the destination track designation field 42, the bus designation field 43, and the mode selection field 44. When the "Off" button 46 is clicked, the DAW 30 stops the direct monitoring process.

The direct monitoring process performed by the audio system according to an embodiment of the present invention will now be described with reference to a flowchart shown in Fig. 5.

When an operation is performed to display a screen of the UI 40 on the display of the PC in which the DAW 30 is started, and the displayed "On" button 45 of the UI 40 is then clicked, a CPU, which is a processing circuit of the PC starts the direct monitoring process shown in Fig. 5. In step S10, the CPU selects a track to be monitored (Track-In). The selected track is the track designated in the monitoring track designation field 41 of the UI 40. Next, in step S11, the CPU selects a track to which an audio signal on the Track-In is to be outputted (Track-Out). The selected track is the track designated in the destination track designation field 42 of the UI 40. When the Track-In and the Track-Out are selected, the CPU identifies a Port-In and a Port-Out in step S12, referring to the first patch information about the first patch portion 21 and the second patch information about the second patch portion 33. The Port-In is an input port to which the audio signal to be inputted to the Track-In is inputted, among the input ports 11 of the first I/O device 10 and the input ports 14 of the second I/O device 13. The Port-Out is an output port to which an audio signal from the Track-Out is outputted, among the output ports 12 of the first I/O device 10 and the output ports 15 of the second I/O device 13.

When the Port-In and the Port-Out are identified, the CPU determines in step S13 whether or not the Port-In and the Port-Out are the input and output ports of the same I/O device. In the present embodiment, if the identified Port-In and Port-Out respectively belong to the input ports 11 and the output ports 12 of the first I/O device 10 or to the input ports 14 and output ports 15 of the second I/O device 13, it is determined in step S13 that the same I/O device is involved, and then processing branches to step S16. In step S16, the CPU connects the identified Port-In to the identified Port-Out (DAW 30 issues an instruction or command for changing the connection to an I/O device having the identified ports), and thereby the audio signal inputted to the Port-In is outputted from the Port-Out. Then the CPU terminates the direct monitoring process. When the identified Port-In is connected to the identified Port-Out, the audio signal from the audio network 20 is blocked or subjected to mixing in a mode selected in the mode selection field 44 of the UI 40.

Alternatively, if the identified Port-In belongs to the input ports 11 of the first I/O device 10 and the identified Port-Out belongs to the output ports 15 of the second I/O device 13 or if the identified Port-In belongs to the input ports 14 of the second I/O device 13 and the identified Port-Out belongs to the output ports 12 of the first I/O device 10, it is determined in step S13 that different I/O devices are involved, and then processing proceeds to step S14. In step S14, the CPU assigns the audio signal inputted from the Port-In to a monitoring bus selected in the bus designation field 43 of the UI 40 (DAW 30 issues an instruction or command for changing the connection to an I/O device having the identified Port-In). Then, in step S15, the CPU assigns the audio signal from the monitoring bus assigned in step S14 to the Port-Out (the DAW 30 issues an instruction or command for changing the connection to an I/O device having the identified Port-Out). As a result, the audio signal inputted to the Port-In of one I/O device is outputted from the Port-Out of another I/O device. Then the CPU terminates the direct monitoring process. Also in this instance, when the identified Port-In is connected to the identified Port-Out, the audio signal from the audio network 20 is blocked or subjected to mixing in a mode selected in the mode selection field 44 of the UI 40.

Consequently, the audio signal inputted from the Port-In is directly outputted from the Port-Out. This makes it possible to directly monitor an audio signal without a time lag.

As described above, when the "On" button 45 of the UI 40 is operated to turn on monitoring, the above-described direct monitoring process is performed so that an audio signal on the track A to be monitored, which is selected in the monitoring track designation field 41, is directly outputted from an output port of an I/O device corresponding to the track B, which is selected in the destination track designation field 42. In such a case, an audio signal from the track B is blocked and will not be outputted from the output port of an I/O device. In this instance, the audio signal from the track B is blocked at an outlet of the track B, blocked at the output port 32 of the DAW 30 that is assigned to the track B, or, as described earlier with reference to Figs. 3A and 3B, blocked at an output port of an I/O device corresponding to the track B. An audio signal can be blocked by removing the assignment of the audio signal to the port.

Note that when a user-monitored target monitoring device is connected to an output port of an I/O device, a track corresponding to the output port is to be selected in the destination track designation field 42 of the UI 40.

Meanwhile, when the "Off" button 46 of the UI 40 is operated to turn off monitoring, the switches of the above-mentioned Port-In are turned off, and the switch of the Port-Out is set to "1", which corresponds to the audio network 20 (or the level of a signal from the audio network 20, which is restored to "1 (attenuation amount: 0 dB)", and the level of a signal from the monitoring buses 16 is set to "0 (attenuation amount: - ∞ dB)"). This ensures that an audio signal outputted from the track B of the DAW 30 (track Tr9 in the example of Fig. 4) is outputted again from the Port-Out.

It is assumed that the above-described audio system according to an embodiment of the present invention uses two I/O devices. However, even if three or more I/O devices are connected to the DAW through the audio network, direct output can be achieved through the three or more I/O devices. Further, the number of input ports and output ports of the I/O devices that is indicated in the drawings is merely an example. The I/O devices may include any number of input ports and output ports. Further, the monitoring buses 16 may be connected to plural input ports and to plural output ports.

### {Industrial Applicability}

The audio system according to an embodiment of the present invention is applicable to an audio mixing system for various scenes, such as a public address (PA) system for, for example, concert halls and large-scale events, an announcement system for department stores, schools, and other institutions, and a recording system for a music recording studio.

### {Reference Signs List}

1... audio system, 10... first I/O device, 11... input ports, 12... output ports, 13... second I/O device, 14... input ports, 15... output ports, 16... monitoring buses, 17... mixer circuit, 20... audio network, 21... first patch portion, 30... DAW, 31... input ports, 32... output ports, 33... second patch portion, 34... tracks, 35... buses, 40... UI, 41... monitoring track designation field, 42... destination track designation field, 43... bus designation field, 44... mode selection field, 45... "On" button, 46... "Off" button, SWa, SWb and SWc... switches, and SWd... selector switch

## Claims

1. An audio system (1) comprising:
a plurality of I/O devices (10, 13) respectively including a first input/output port (11, 12, 14, 15) having a plurality of ports;
an audio signal processing device (30) including at least a second input/output port (31, 32) and a plurality of tracks (34), the second input/output port (31, 32) having a plurality of ports;
an audio network (20) configured to connect the audio signal processing device (30) with the I/O devices (10, 13);
a first patch portion (21) configured to logically connect an arbitrary port of the first input/output port (11, 12, 14, 15) and an arbitrary port of the second input/output port (31, 32) over the audio network (20);
a second patch portion (33) configured to logically connect an arbitrary port of the second input/output port (31, 32) and an arbitrary one of the tracks (34) in the audio signal processing device (30); and
a plurality of monitoring buses (35) configured to connect the ports of the first input/output port (11, 12, 14, 15) in the I/O devices (10, 13),
wherein, when a track A, which is one of the tracks (34) and is to be monitored, and a track B, which is one of the tracks (34) and is a destination to which an audio signal on the track A is to be outputted, are selected, an input port among the first input/output port (11, 14) that corresponds to the track A and an output port among the first input/output port (12, 15) that corresponds to the track B are identified based on information about a connection by the first patch portion (21) and the second patch portion (33), the identified input port and the identified output port are assigned to a selected one of the monitoring buses (16), and an audio signal from the identified input port is outputted from the identified output port instead of or in addition to an audio signal from the track B.

2. The audio system (1) according to claim 1,
wherein, when the track A and the track B are selected, an assignment of an audio signal from the track B to the identified output port is canceled, and thereby an audio signal from the identified input port is outputted from the identified output port instead of an audio signal from the track B.

3. The audio system (1) according to claim 1,
wherein, when the track A and the track B are selected, an audio signal from the track B which was assigned to the identified output port is blocked in a path between the track B and the identified output port, and thereby an audio signal from the identified input port is outputted from the identified output port instead of an audio signal from the track B.

4. The audio system (1) according to claim 3,
wherein an audio signal outputted from the track B is blocked.

5. The audio system (1) according to claim 3,
wherein an audio signal outputted from an output port of the second input/output port (32) that is logically connected to the track B is blocked.

6. The audio system (1) according to claim 3,
wherein an audio signal from the track B is blocked at the identified output port.

7. The audio system (1) according to claim 1,
wherein, when the track A and the track B are selected, an audio signal from the identified input port and an audio signal from the track B are outputted from the identified output port after being mixed at a predetermined mixing ratio, and thereby the audio signal from the identified input port is outputted from the identified output port in addition to the audio signal from the track B.

8. An audio signal processing device (30) to which a plurality of I/O devices (10, 13) respectively including a first input/output port (11, 12, 14, 15) having a plurality of ports are connected via an audio network (20),
the audio signal processing device (30) comprising:
a second input/output port (31, 32) having a plurality of ports;
a plurality of tracks (34); and
a second patch portion (33) configured to logically connect an arbitrary port of the second input/output port (31, 32) and an arbitrary one of the tracks (34),
wherein an arbitrary port of the first input/output port (11, 12, 14, 15) and an arbitrary port of the second input/output port (31, 32) are logically connected over the audio network (20) by a first patch portion (21), and the ports of the first input/output port (11, 12, 14, 15) in the I/O devices (10, 13) are connected by a plurality of monitoring buses (16), and
wherein, when a track A, which is one of the tracks (34) and is to be monitored, and a track B, which is one of the tracks (34) and is a destination to which an audio signal on the track A is to be outputted, are selected, the audio signal processing device (30) identifies an input port among the first input/output port (11, 14) that corresponds to the track A and an output port among the first input/output port (12, 15) that corresponds to the track B based on information about a connection by the first patch portion (21) and the second patch portion (33), assigns the identified input port and the identified output port to a selected one of the monitoring buses (16), and outputs, from the identified output port, an audio signal from the identified input port instead of or in addition to an audio signal from the track B.

9. The audio signal processing device (30) according to claim 8,
wherein, when the track A and the track B are selected, the audio signal processing device (30) cancels an assignment of an audio signal from the track B to the identified output port, thereby outputting, from the identified output port, an audio signal from the identified input port instead of an audio signal from the track B.

10. The audio signal processing device (30) according to claim 8,
wherein, when the track A and the track B are selected, the audio signal processing device (30) outputs, from the identified output port, an audio signal from the identified input port and an audio signal from the track B after mixing the audio signals at a predetermined mixing ratio, thereby outputting, from the identified output port, the audio signal from the identified input port in addition to the audio signal from the track B .

11. The audio signal processing device (30) according to claim 8,
wherein, when the track A and the track B are selected, the audio signal processing device (30) blocks an audio signal from the track B which was assigned to the identified output port in a path between the track B and the identified output port, thereby outputting, from the identified output port, an audio signal from the identified input port instead of an audio signal from the track B.
